(19) **Europäisches Patentamt**
**European Patent Office**
**Office européen des brevets**

(11) **EP 4 140 830 B1**

(12) **EUROPEAN PATENT SPECIFICATION**

(45) Date of publication and mention
of the grant of the patent:
**26.11.2025  Bulletin 2025/48**

(51) International Patent Classification (IPC):
*B60R 21/235* (2006.01)    *D03D 1/02* (2006.01)
*D03D 13/00* (2006.01)    *D03D 15/283* (2021.01)
*D03D 15/567* (2021.01)    *D03D 15/573* (2021.01)

(21) Application number: **21834499.2**

(22) Date of filing: **28.06.2021**

(52) Cooperative Patent Classification (CPC):
**B60R 21/235; D03D 1/02; D03D 13/008;
D03D 15/283; D03D 15/567; D03D 15/573;**
B60R 2021/23509; D10B 2331/04; D10B 2401/04;
D10B 2401/063; D10B 2505/124

(86) International application number:
**PCT/KR2021/008112**

(87) International publication number:
**WO 2022/005137 (06.01.2022 Gazette 2022/01)**

(54) **AIRBAG CUSHION AND MANUFACTURING METHOD THEREFOR**

AIRBAGKISSEN UND HERSTELLUNGSVERFAHREN DAFÜR

COUSSIN DE SÉCURITÉ GONFLABLE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2020  KR 20200080355**

(43) Date of publication of application:
**01.03.2023  Bulletin 2023/09**

(73) Proprietor: **Kolon Industries, Inc.
Seoul 07793 (KR)**

(72) Inventors:
• **KIM, Ki Jeong**
**Seoul 07793 (KR)**
• **CHUNG, Il**
**Seoul 07793 (KR)**
• **HEO, Jin Wook**
**Seoul 07793 (KR)**
• **KIM, Hyo Eun**
**Seoul 07793 (KR)**
• **PARK, Ji Hoon**
**Seoul 07793 (KR)**
• **PARK, Sung Ho**
**Seoul 07793 (KR)**
• **LIM, Ki Sub**
**Seoul 07793 (KR)**

(74) Representative: **Ter Meer Steinmeister & Partner
Patentanwälte mbB
Nymphenburger Straße 4
80335 München (DE)**

(56) References cited:
JP-A- 2000 211 459     JP-A- 2000 313 295
JP-A- 2017 020 126     JP-A- H10 168 700
JP-B2- 3 849 818      KR-A- 20180 128 948
KR-B1- 101 352 327     KR-B1- 101 736 422
US-B2- 9 617 664

EP 4 140 830 B1

**Description**

**[TECHNICAL FIELD]**

CROSS-REFERENCE TO RELATED APPLICATION(S)

This application claims the benefit of Korean Patent Application 10-2020-0080355 filed on June 30, 2020 and Korean Patent Application No. 10-2021-0083993 filed on June 28, 2021 in the Korean Intellectual Property Office.

TECHNICAL FIELD

The present application relates to an airbag cushion and a method for preparing the same.

**[BACKGROUND ART]**

When the airbag cushion is deployed due to a vehicle crash, the airbag cushion may be damaged due to impact or contact friction, and as a result, the impact mitigation performance and occupant restraint performance of the airbag cushion may be deteriorated. In order to prevent such performance degradation, the prior art has considered putting coated or uncoated reinforcing fabrics over to protect a fragile area (see for example JP 3 849818 B2, JP 2000 211459 A, JP 2000 313295 A). For example, a reinforcing cloth fabric prepared using PA66 yarn, polyester or the like was put over the fragile area to protect the airbag cushion. And, when the area requiring protection is particularly fragile to impact, the process of using a thick coated fabric as the reinforcing fabric or putting a thin reinforcing fabric over in multiple layers has been applied.

However, the above process also shows problems. Specifically, general-purpose yarns used in the prior art, such as PA 66 or polyester, have insufficient mechanical strength and are fragile to puncture due to external impact or sharp object puncture. Further, the process of using a thick coating fabric to protect fragile areas or putting multiple layers of reinforcing fabrics over makes it difficult to fold the airbag cushion, and increases the roll diameter in the folded state which also interferes with the storage of the airbag cushion. In addition, the above process also causes problems in weight increase and cost increase of the product. Furthermore, from US 9 617 664 B2 is known an airbag cushion comprising a fiber substrate; the fiber substrate containing polyester yarn as a warp and weft component, wherein the polyester yarn has a tenacity of 8.2 g/d or more, and an elongation at specific load measured at a load of 4.0 g/d of 4 %, and the fiber substrate has a finished fabric construction of 49 or 53 yarns per inch in the warp direction and weft direction.

Therefore, there is a need for a technology that has excellent mechanical properties and dimensional stability, can prevent damage (e.g., scratches or tears) caused by external objects, and can also improve the folding and storing property of the airbag.

**[DETAILED DESCRIPTION OF THE INVENTION]**

**[Technical Problem]**

An object of the present application is to provide a reinforcing fabric that can prevent damage (e.g., puncture) to the airbag due to impact or contact friction when deploying the airbag due to a vehicle crash, or can reduce the degree of damage, and an airbag cushion comprising the same.

Another object of the present application is to provide a reinforcing fabric that can improve impact mitigation performance and occupant restraint performance in the event of a vehicle crash compared to the prior art, and an airbag cushion comprising the same.

Another object of the present application is to provide an airbag cushion that facilitates folding and storage

Yet another object of the present application is to provide a lightweight airbag cushion.

The above and other objects of the present application can be completely solved by the present application described in detail below.

**[Technical Solution]**

The inventors of the present application have earnestly studied not only the problems of the prior art described above, but also an airbag cushion that can prevent damage (e.g. scratches or tears) of the airbag cushion by glass fragments broken or peripheral protrusions associated with airbag fastening (e.g. bolts or brackets) during airbag deployment.

Specifically, the inventors of the present application have found that when using yarns having the levels of strength (or tenacity) properties described below in the formation of the reinforcing fabric, the airbag cushion may not be deformed even when folded for a long time, and can effectively reduce the occurrence of breakage due to an external impact even if a small weight is used compared to the prior art. In addition, the inventors of the present application have found that when the yarn forming the reinforcing fabric for an airbag cushion has an elongation at specific load at the level described below, it is possible to reduce the extent to which an external impact is transmitted to the inside of the cushion, and as a result, it is possible to effectively suppress damage to the airbag cushion in the situation of the airbag deployment. Further, the inventors of the present application have found that when the reinforcing fabrics are produced using the yarns of the present application with the characteristics described below, excellent dimensional stability can be provided.

Thereby, the present application simultaneously satisfies the appropriate level of tenacity, elongation, dimensional stability and impact resistance required for an airbag cushion and its reinforcing fabric as confirmed in Experimental Examples described below,

Below, the present application will be described in more detail. The following conversion factors apply for the units used in this description: 1 inch = 25.4 mm; 1 g/d = 8.8 cN/tex; 1 denier = 0.11 tex.

According to the invention, there is provided an airbag cushion. The airbag cushion comprises a fiber substrate; and a reinforcing fabric attached to at least a portion of the fiber substrate surface and containing polyester yarn as a warp and/or weft component.

The reinforcing fabric includes polyester yarns satisfying predetermined strength and elongation at specific load as warp and/or weft components, and has a finished fabric construction of 24 yarns or more to 40 yarns or less per inch in the weft direction or in the warp direction. The "finished fabric construction" means the density of the reinforcing fabric after heat treatment (temperature is e.g. 150°C or more as described below) is performed on the reinforcing fabric woven at a predetermined loom state weave construction. When it has a finished fabric construction in the above range, it is advantageous for securing airtightness and durability.

Specifically, the polyester yarn included in the reinforcing fabric has a tenacity of 8.0 g/d or more, and an elongation at specific load (EASL) measured at a load of 4.5 g/d of 3.0 to 6.0%.

In an illustrative embodiment, the polyester yarn may have a tenacity of 8.5 g/d or more, 9.0 g/d or more, or 9.5 g/d or more. When the strength is less than the above range, breakage due to external impact may easily occur, and deformation caused by maintenance of the folded state may occur. In addition, when the tenacity is less than the above range, a higher weaving density must be given to prevent breakage, which thus causes a problem that the manufacturing cost increases or the reinforcing fabric must be used in several layers. The upper limit of the yarn tenacity may be, for example, 13.0 g/d or less. Considering the use of reinforcing fabrics or the balance with the elongation at specific load, the upper limit of the tenacity of the polyester yarn may be, for example, 11.0 g/d or less, 10.5 g/d or less, or 10.0 g/d or less. The tenacity of the polyester yarn may be measured according to the ASTM D885 method, and a universal tensile tester (Instron Engineering Corp, Canton, Mass) can be used for the measurement.

According to the invention, the yarn has an elongation at specific load (EASL, @4.5 g/d load) in the range of 3.0 to 6.0%. That is, the reinforcing fabric includes a polyester yarn having an elongation at specific load of 3.0 to 6.0% as measured under a load of 4.5 g/d as a warp or weft component. Considering the characteristics of polyester yarn, if the elongation at specific load is less than the above range, weaving is not easy due to high modulus, and excessive heat shrinkage occurs during heat treatment of the fabric, making it difficult to secure the physical properties and dimensional stability of the reinforcing fabric. In addition, when the elongation at specific load exceeds the above range, an external impact cannot be prevented due to the low modulus, and damage due to tearing or scratching of the cushion occurs while the external impact is transmitted to the inside of the cushion. Considering the problems of the prior art and the reinforcing fabric weaving applications described above, the lower limit of the elongation at specific load of the yarn may be, for example, more than 3.0% or more than 3.5%, and more specifically, it may be 4.0% or more or 4.5% or more. And, the upper limit thereof may be, for example, less than 6.0, specifically 5.5% or less, 5.4% or less, 5.3% or less, 5.2% or less, 5.1% or less, or 5.0% or less. The elongation at specific load of the polyester yarn can be measured using the ASTM D885 method. Specifically, a tensile test is performed according to ASTM D885 method using a universal tensile tester (Instron Engineering Corp, Canton, Mass), and the elongation at a load of 4.5 g/d measured on the S-S curve obtained therefrom may be the elongation at specific load.

In an illustrative embodiment, the polyester yarn may have a dry heat shrinkage of less than 10%. If the dry heat shrinkage exceeds the above range, the degree of deformation increases during the heat treatment process for the reinforcing fabric, which causes problems such as torsion of the fabric. Considering the above-mentioned balance between tenacity and elongation at specific load, and the dimensional stability described below, the upper limit of the dry heat shrinkage of the yarn may be, for example, 6.0% or less, 5.5% or less, or 5.0% or less, and the lower limit thereof may be, for example, 3.0% or more, 3.5% or more, or 4.0% or more. The dry heat shrinkage of the yarn can be measured according to ASTM D4974. And, a dry heat shrinkage measuring device (LENZING INSTRUMENT, Inc.) can be used for the measurement. Specifically, the yarn is passed through the sensor on the opposite side while the yarn is fixed at one side end of the device, put into an oven at about 170 to 180°C after applying a load of 0.05 g/d. Then, the dry heat shrinkage can be calculated from the percentage calculated by automatically measuring the extent to which the yarn has been shrunken for 2 minutes.

In an illustrative embodiment, the yarn satisfies a dimensional stability index of 10.0 or less as determined by the following Equation 1.

Dimension stability index = Elongation at specific load of yarn + Dry heat shrinkage of yarn          [Equation 1]

(wherein, in Equation 1, the elongation at specific load is the elongation at a load of 4.5 g/d, which is confirmed in the tensile test conducted according to the ASTM D885 method, and the dry heat shrinkage is measured according to ASTM D4974).

The dimensional stability index expressed by Equation 1 is a numerical value obtained by combining the elongation at specific load (%) and the dry heat shrinkage (%) described below, and comprehensively considers the degree of physical change and the degree of thermal change of the yarn. The dimensional stability index, which is the sum of the elongation at specific load (E) and the dry heat shrinkage (S), may be represented by the ES rate (%).

The reinforcing fabric is intended to supplement the physical properties of the fragile area of the fiber substrate to which it is attached, and is required to have stiffness or king stiffness at an appropriately high level. In addition, in order to obtain stiffness suitable for use in the reinforcing fabric, an appropriate level of the elongation at specific load and an appropriate shrinkage at the yarn level are required. However, if the dimensional stability index exceeds 10, the elongation at specific load may be high, whereby the physical properties of the reinforcing fabric and the airbag cushion may be rather degraded, such as a decrease in stiffness.

In an illustrative embodiment, the lower limit of the dimensional stability index that the yarn satisfies may be 6.0 or more. Even if the dimensional stability index is less than 6, it can be seen that a certain degree of dimensional stability is secured, but if the dimensional stability index is less than 6, it is highly likely that the elongation at specific load of the yarn will be significantly lowered, and if the elongation at specific load is low, there is a problem as described above, and the physical properties of the fabric is not good.

In an illustrative embodiment, the yarn may have an initial elastic modulus in the range of 100 to 150 g/d. Specifically, the lower limit of the initial elastic modulus of the yarn may be, for example, more than 110 g/d, specifically, 115 g/d or more, 120 g/d or more, 125 g/d or more, 130 g/d or more, 135 g/d or more, 140 g/d or more, or 145 g/d or more. And, the upper limit thereof may be, for example, 150 g/d or less, 145 g/d or less, 140 g/d or less, 135 g/d or less, 130 g/d or less, or 125 g/d or less. The yarn satisfying the initial elastic modulus as described above may impart stiff characteristics to the reinforcing fabric. The initial elastic modulus can be confirmed by measuring an initial slope value from a straight section to a yield point in the stress-strain S-S curve obtained from the tensile test. For example, the initial elastic modulus can be measured using the ASTM D885 method, similarly to the EASL measurement. Specifically, a tensile test is performed according to the ASTM D885 method using a universal tensile tester (Instron Engineering Corp, Canton, Mass), and it can be measured from the slope in the initial straight section on the S-S curve obtained therefrom..

In an illustrative embodiment, the polyester yarn may have a total fineness of 420 denier or more. Specifically, the lower limit of the fineness of the polyester yarn may be, for example, 500 denier or more, 550 denier or more, 600 denier or more, and more specifically, 900 denier or more or 950 denier or more. If the fineness satisfies the above range, it is advantageous for securing excellent strength or tenacity. Although it is not particularly limited, for example, the yarn may include 100 to 500 filaments having a fineness of 2 to 5 denier.

In an illustrative embodiment, the upper limit of the fineness of the polyester yarn may be, for example, 1,450 denier or less, 1,400 denier or less, 1,350 denier or less, 1,300 denier or less, 1,250 denier or less, 1,200 denier or less, 1,150 denier or less, 1,100 denier or less, or 1,050 denier or less.

In an illustrative embodiment, the polyester yarn may be a polyethylene terephthalate (PET) yarn. Specifically, the yarn may be a yarn obtained by melt spinning a polyethylene terephthalate chip.

In an illustrative embodiment, the polyethylene terephthalate yarn may have an intrinsic viscosity (I.V) of 0.80 g/dl or more. Specifically, the lower limit of the intrinsic viscosity may be, for example, 0.85 g/dl or more, 0.90 g/dl or more, 0.95 g/dl or more, or 1.00 g/dl or more. When the intrinsic viscosity satisfies the above range, it may be advantageous for securing the characteristics of the yarn described above, particularly tenacity or strength. The upper limit of the intrinsic viscosity is not particularly limited, and may be adjusted at a level that satisfies the characteristics of the yarn described above.

In an illustrative embodiment, the polyethylene terephthalate yarn may have a crystallinity of 40% or more. Specifically, the lower limit of the crystallinity may be, for example, 45% or more or 50% or more. When the crystallinity satisfies the above range, it may be advantageous for securing the characteristics of the yarn described above, particularly an elongation at specific load. In addition, when the crystallinity is lower than the above range, sufficient durability cannot be secured due to the high amorphous portion even after aging for a long time. The upper limit of the crystallinity is not particularly limited, and can be appropriately adjusted at a level that satisfies the characteristics of the yarn described above.

A polyester yarn having the characteristics described above is used for forming the reinforcing fabric.

In an illustrative embodiment, the reinforcing fabric may include polyester yarn as a warp component. At this time, the reinforcing fabric has a finished fabric construction of 24 or more per inch in the warp direction. When the finished fabric construction is less than the above range, deformation of the fabric and bending of the warp yarn may occur due to its low density. If the warp direction density of the reinforcing fabric is too large, the weaving property is not good and the physical properties of the fabric may be deteriorated due to the friction between the yarns and the yarn damage resulting therefrom. Thus, taking this into consideration, the upper limit of the density in the warp direction of the reinforcing fabric is 40 or less or 35 or less.

In an illustrative embodiment, the reinforcing fabric may include a polyester yarn as a weft component. At this time, the reinforcing fabric has a finished fabric construction of 24 or more per inch in the weft direction. When the finished fabric construction is less than the above range, deformation of the fabric and bending of the weft yarn may occur due to its low density. If the weft direction density of the reinforcing fabric is too large, the weaving property is not good and the physical properties of the fabric may be deteriorated due to the friction between the yarns and the yarn damage resulting therefrom. Thus, taking this into consideration, the upper limit of the density in the weft direction of the reinforcing fabric is 40 or less or 35 or less.

In an illustrative embodiment, the reinforcing fabric may include polyester yarns as warp and weft components. That is, the reinforcing fabric may be a fabric woven only from polyester yarns having the characteristics described above. In this case, the finishing densities of the fabric in the warp direction and the weft direction are the same as the ranges described above.

The reinforcing fabric described above can be used to protect a fragile portion of an airbag cushion and provide physical properties suitable for the above-mentioned purpose. The meaning of the fragile portion is not particularly limited, but considering the principle of operation of the airbag, the installation of the airbag and the impact conditions under which the airbag deploys, and the like, for example, the area of the airbag adjacent to the so-called inflator that ejects gas for inflating the airbag, the joint portion between the materials forming the airbag, areas where friction occurs between materials forming an airbag during storage or deployment, the airbag portion adjacent to the device that installs the airbag on a vehicle, other areas that are likely to be exposed to glass or sharp objects when the airbag is deployed, and the like may be a fragile portion of the airbag cushion to which the reinforcing fabric can be put over.

The fiber substrate means a configuration to which the reinforcing fabric can be attached. Specifically, the fiber substrate refers to a configuration that forms an airbag cushion prepared so as to have a predetermined shape in the deployment and inflation conditions of the airbag. For example, the fiber substrate may refer to a material forming a main panel or a part of a main panel forming a so-called airbag cushion in the airbag-related technical field.

The shape of the fiber substrate or the material forming the fiber substrate are not particularly limited as long as it has an area to which the reinforcing fabric can be attached.

In an illustrative embodiment, the fiber substrate may be a woven or non-woven fabric known to be usable in the preparation of an airbag, or may include one or more thereof.

In an illustrative embodiment, the fiber substrate may include one or more fibers selected from the group consisting of a nylon fiber, a polyester fiber, a polyolefin fiber, and an aramid fiber. However, it is not limited to these fibers listed above.

In an illustrative embodiment, the fineness of the fiber contained in the fiber substrate may be 400 denier or more from the viewpoint of securing an appropriate level of strength (or tenacity). Considering of putting the reinforcing fabric over and securing the storage property, the upper limit of the fineness of the fiber included in the fiber substrate may be, for example, 550 denier or less.

In an illustrative embodiment, the fiber substrate may be a fabric. For example, the fiber substrate may have a 1/1 plain weave structure, but is not particularly limited thereto.

In an illustrative embodiment, the fiber substrate may have a coating layer on its surface. The coating layer imparts airtightness to the fiber substrate. A method of forming the coating layer on the surface of the fiber substrate is not particularly limited. For example, the coating layer may be formed through a method such as dipping a textile-type fiber substrate into a known silicone coating agent or spraying a silicone coating agent on the fiber substrate. Alternatively, the coating layer can be formed even by laminating a polymer film on the fiber substrate under high temperature conditions.

The reinforcing fabric is attached to the fiber substrate in order to protect the fragile portion of the fiber substrate and to secure the above-mentioned physical properties for the airbag cushion. The attachment method is not particularly limited. For example, the reinforcing fabric and the fiber substrate can be attached using a sewing method, an adhesive, a heat treatment, an ultrasonic treatment, or the like.

In an illustrative embodiment, the reinforcing fabric may be attached to a partial area of the fiber substrate surface. In this case, the area of the reinforcing fabric may be smaller than the area of the fiber substrate.

In another illustrative embodiment, the reinforcing fabric may be attached to the entire area of the fiber substrate surface. In this case, the area of the reinforcing fabric may be greater than or equal to the area of the fiber substrate.

In an illustrative embodiment, one layer of reinforcing fabric can be attached onto the fiber substrate. That is, even if the airbag cushion includes only one layer of reinforcing fabric on the fiber substrate, the damage to the airbag cushion can be suppressed, and excellent impact mitigation performance and occupant restraint performance can be provided in the event of a vehicle crash. The above-mentioned effect can be secured even through the use of one layer of reinforcing fabric, and thus, according to the present application, it is not necessary to use multiple layers of reinforcing fabrics. Therefore, according to the present application, there is provided an airbag cushion that has excellent storage properties in a folded state and is lightweight.

In another embodiment related to the present application, there is provided a method for preparing an airbag cushion. The characteristics of the airbag cushion and its components are the same as those described above. Specifically, the method comprises a) a step of preparing a fabric having a loom state weave construction of 20 yarns or more in the warp direction and the weft direction using a polyester yarn having a tenacity of 8.0 g/d or more, and an elongation at specific load measured at a load of 4.5 g/d of 3.0 to 6.0%; b) a step of heat-treating the fabric at a temperature of 150°C or more to produce a reinforcing fabric having a finished fabric construction of 24 or more to 40 or less in warp or weft direction; and c) a step of attaching the reinforcing fabric onto at least a portion of the surface of a fiber substrate.

In an illustrative embodiment, the yarn used for preparing the fabric in step a) may be prepared through a predetermined process. The process described later can impart the above-described characteristics suitable for the reinforcing fabric to the yarn.

Specifically, the polyester yarn can be prepared through the step of spinning a polyester melt to produce (a plurality of) filaments; a step of converging the plurality of filaments to form a multi-filament; and winding the converged multi-filaments at a draw ratio of 1.50 to 3.50 while passing through a plurality of godet rollers including a first godet roller having a speed of 2,500 to 3,500 mpm. At this time, the converged multi-filaments are undrawn yarns.

In an illustrative embodiment, the spun melt may be obtained by melting a polyester chip having an intrinsic viscosity of 0.8 dl/g or more, specifically 1.0 dl/g or more. In the case of the melt temperature, it can be appropriately adjusted at a level that allows the produced yarn to have the characteristics described above.

In an illustrative embodiment, a spinneret for spinning the molten solution may include a nozzle having a plurality of discharge holes. The structure of the spinneret is not particularly limited, but the number of the discharge holes may be in the range of 200 to 300, and the ratio of the length (L) to the diameter (D) of each hole may be in the range of 2 to 5.

In an illustrative embodiment, the method may further include the step of cooling and solidifying the plurality of filaments before converging the plurality of spun filaments. The solidification method is not particularly limited, but, for example, a cooling wind may be used for solidifying the filaments. At this time, the cooling wind may be applied within a time and temperature condition enough to be considered that the plurality of multi-filaments has completely been solidified.

During production of the multi-filaments, a method or a device for converging thereof is not particularly limited, and known methods and devices can be used.

In an illustrative embodiment, the plurality of godet rollers may include a plurality of godet rollers including a first godet roller. Specifically, the plurality of godet rollers may include n godet rollers (where n may be 2 or more, and for example, may be 10 or less). That is, in relation to drawing, they may be arranged sequentially along a path in which stretching or drawing is performed from the first godet roller to the n-th godet roller. At this time, the spinning speed of the first godet roller determines the overall spinning speed. In a specific embodiment of the present application, the spinning speed of the first godet roller is controlled in the range of 2,500 to 3,500 mpm. And, when n godet rollers are used in the process of preparing the yarn, the draw ratio can be determined by a ratio of the speed of the n-1 th godet roller to the speed of the first godet roller. For example, the draw ratio during the preparation of the yarn may be in the range of 1.50 to 3.50, specifically, the lower limit thereof may be 1.5 or more, 2.0 or more, 2.5 or more, or 3.0 or more, and the upper limit thereof may be, for example, 3.0 or less, 2.5 or less, or 2.0 or less. In addition, in the path where other drawing is performed, the section between the n-1 th godet roller and the n-th godet roller arranged last can be generally viewed as a relaxation section that prevents instability of the drawn yarn. Thereby, the n-th godet roller has an appropriate level of speed that does not interfere with relaxation. The speed of the god roller related to other drawing can be controlled at a level that does not interfere with the physical properties of the yarn described above, and more specifically, at a level that does not interfere with the physical properties of the yarn described above while satisfying the spinning speed and the draw ratio described above.

The speed of the first godet roller and the conditions associated therewith can be determined in consideration of the modulus characteristic of the yarn. Specifically, the inventors of the present application confirmed that the speed of the first godet roller and modulus characteristics may have a proportional shape. More specifically, in order to secure the impact resistance of the reinforcing fabric, it is preferable to use a yarn having a high modulus, but the lower limit of the speed of the first godet roller and/or the draw ratio related thereto makes it possible to secure high modulus characteristics of the yarn suitable for the reinforcing fabric. On the other hand, if the speed of the first godet roller is too high, it may cause broken filament defects and processability deterioration, and may also have an adverse effect on subsequent weaving of the fabric, and thus it is preferable to adjust the upper limit within the above-mentioned speed range.

The speed of the first godet roller may be adjusted in consideration of the above-mentioned characteristics of the yarn (e.g., a high modulus characteristic of an appropriate level suitable for use). For example, the lower limit of the speed of the first godet roller may be 2600 mpm or more, 2700 mpm or more, 2800 mpm or more, 2900 mpm or more, 3000 mpm or more, 3100 mpm or more, 3200 mpm or more, 3300 mpm or more, or 3400 mpm or more. And, the upper limit thereof may be, for example, 3400 mpm or less, 3300 mpm or less, 3200 mpm or less, 3100 mpm or less, 3000mpm or less, 2900mpm or less, 2800mpm or less, 2700mpm or less, or 2600mpm or less.

The draw ratio may be adjusted in consideration of the above-mentioned characteristics of the yarn (e.g., a high modulus property of an appropriate level suitable for use). For example, the lower limit of the draw ratio may be 1.5 or more, 1.6 or more, 1.7 or more, 1.8 or more, 1.9 or more, 2.0 or more, 2.1 or more, 2.2 or more, 2.3 or more, 2.4 or more, 2.5 or more, 2.6 or more, 2.7 or more, 2.8 or more, 2.9 or more, 3.0 or more, 3.1 or more, 3.2 or more, 3.3 or more, or 3.4 or more. And, the upper limit thereof may be, for example, 3.4 or less, 3.3 or less, 3.2 or less, 3.1 or less, 3.0 or less, 2.9 or less, 2.8 or less, 2.7 or less, 2.6 or less, 2.5 or less, 2.4 or less, 2.3 or less, 2.2 or less, 2.1 or less, 2.0 or less, 1.9 or less, 1.8 or less, 1.7 or less, or 1.6 or less.

In an illustrative embodiment, the heat treatment of step b) can be performed by passing the fabric through a hot air tenter. Specifically, the heat treatment can be performed in such a manner that the fabric passes through a tenter chamber having a temperature of 160 to 190°C within a few minutes, for example, within about 30 seconds to 2 minutes.

In relation to the heat treatment temperature, the crystallization temperature of polyester is usually around 150°C, but when the heat treatment is performed at a temperature lower than 150°C, the setting of the fabric is not sufficiently performed, so that the fabric is deformed, and a reinforcing fabric having sufficient physical properties cannot be obtained.

In an illustrative embodiment, in relation to step c), the method of attaching the reinforcing fabric and the fiber substrate is not particularly limited. For example, the reinforcing fabric and the fiber substrate may be attached using sewing, heat treatment, or ultrasonic treatment, or the reinforcing fabric and the fiber substrate may be attached through an adhesive.

In an illustrative embodiment, the method may further include a step of removing impurities from the fabric, prior to the heat treatment. Removal of these impurities may be performed, for example, by passing through a refining tank and/or a washing tank having a temperature in the range of 60 to 80°C. At this time, the refining tank is to accommodate the refining agent composition, and the washing tank means receiving a so-called washing liquid. In some cases, refining and washing may be performed simultaneously in one tank. It can be expected to secure more stable physical properties by removing impurities.

**[Advantageous Effects]**

According to the present application, when the airbag is deployed due to a vehicle crash, an airbag cushion capable of preventing or reducing the degree of damage due to an impact or contact friction can be provided. In addition, the airbag cushion of the present application provides superior impact mitigation performance and occupant restraint performance in the event of a vehicle crash compared to the prior art. Further, since the airbag cushion can provide the above functions even with a single layer of reinforcing fabric, it also contributes to reducing the weight of the airbag cushion and improving the folding and storing property of the airbag cushion.

**[BRIEF DESCRIPTION OF THE DRAWINGS]**

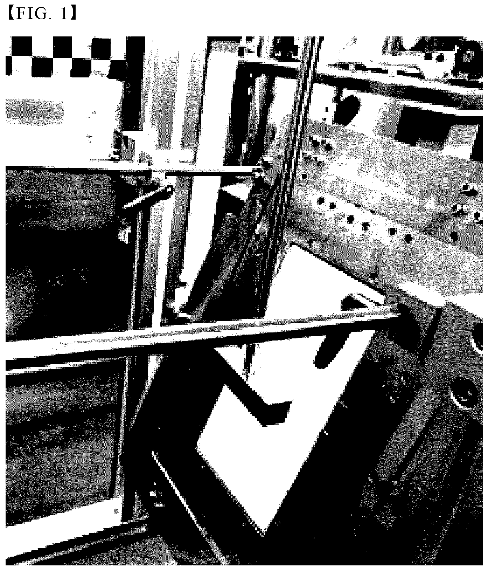

Fig. 1 is a photograph taken from part of the device for the impact puncture resistance measurements described in Experimental Examples below.

**[DETAILED DESCRIPTION OF THE EMBODIMENTS]**

Hereinafter, the action and effect of the invention will be described in more detail with reference to specific examples of the invention. However, these examples are presented for illustrative purposes only, and the scope of the invention is not limited thereto in any sense.

**Example and Comparative Example**

**Example 1**

A polyester yarn (PET) having a fineness of 1,000 denier (250 filaments each having a fineness of about 4 denier) was used as the yarn used for the reinforcing fabric. Specifically, a polyester yarn satisfying a tenacity of 9.0 g/d, a modulus characteristic of an elongation at specific load of 5.0% at 4.5 g/d, and a dry heat shrinkage of 4.5% was used for weaving the fabric for reinforcing fabric. These yarns were prepared according to the method previously described (specifically, prepared through the process in which five godet rollers were used during drawing, the speed of the first godet roller was within the range of 2,500 to 3,500 mpm, and the draw ratio was adjusted to a draw ratio of about 2.00 to 2.20).

The reinforcing fabric was woven so as to have a loom state weave construction in the warp and weft directions of 20 x 20 (warp x weft) yarns per unit inch. Then, the woven fabric was continuously passed through a scouring tank maintained at a temperature of about 85°C to remove impurities from the fabric. After that, for post-processing heat treatment for shrinkage expression and heat setting, the fabric from which impurities were removed was heat-treated at 180°C for about 1 minute in such a way that it passed through a hot-air tenter. The resulting reinforcing fabric has a final finished fabric construction of 24.2 x 24.0 (warp x weft) yarns per unit inch in the warp and weft directions, respectively.

The characteristics of the yarns used and the density characteristics of the fabrics are shown in Table 1 below.

## Example 2

Through the same process as in Example 1, the yarn having the same characteristics as in Example 1 was used for weaving the reinforcing fabric, except that the tenacity and initial elastic modulus of the yarn are different as shown in Table 1.

In addition, the final finished fabric construction of the prepared reinforcing fabric was 24.5 x 24.0 (warp x weft) yarns per unit inch in the warp and weft directions, respectively. Other weaving processes and conditions were the same as those described in Example 1.

## Example 3

The same polyester yarn as in Example 1 was used for weaving the fabric. However, in the weaving of the reinforcing fabric, the textile fabric was woven so as to have the loom state weave construction in the warp and weft directions of 24.0 x 24.0 yarns (warp x weft) per unit inch, and subjected to shrinkage expression and heat setting. The fabric was prepared so that the final finished fabric construction of the resulting textile fabric was 26.2 x 26.7 (warp x weft) yarns per unit inch in the warp and weft directions, respectively. Other weaving processes and conditions were the same as those described in Example 1.

## Comparative Example 1

The yarn was prepared by varying the spinning speed and the draw ratio range applied when preparing the yarn of Example 1 (specifically, the spinning speed was less than 2500 mpm and the draw ratio was about 1.8). The prepared polyester yarn showed a tenacity of 7.0 g/d, a modulus characteristic of the elongation at specific load of 7.0% at 4.5 g/d, a dry heat shrinkage of 2.0% and an initial elastic modulus of 110 g/d, which was used for weaving a reinforcing fabric.

The resulting reinforcing fabric had a final finished fabric construction of 24.3 x 24.2 (warp x weft) yarns per unit inch in warp and weft directions, respectively. Other conditions regarding the production and weaving process of the yarn are the same as those described in Example 1.

## Comparative Example 2

As shown in Table 1, a polyester yarn having an initial elastic modulus of the yarn different from that of Example 1 was used for weaving the fabric.

In the weaving of a reinforcing fabric, the textile fabric was woven so as to have a loom state weave construction in the warp and weft directions of 18 x 18 (warp x weft) yarns per unit inch, and subjected to shrinkage expression and heat setting. The fabric was prepared so that the final finished fabric construction of the resulting textile fabric was 20.3 x 20.1 (warp x weft) yarns per unit inch in the warp and weft directions, respectively. Other conditions related to the production and weaving process of the yarn are the same as those described in Comparative Example 1.

## Comparative Example 3

As shown in Table 1, a polyester yarn having the same yarn characteristics as in Comparative Example 2 was used for weaving the fabric.

In the case of weaving, a fabric was prepared through the same conditions and process as in Example 1, except that the post-finishing heat treatment temperature for the fabric that has undergone the removal of impurities was heat-treated at 130°C.

## Evaluation of the fabric

(1) Tensile Strength and Elongation

This is for measuring tensile strength in warp and weft directions, and specimens with a size of 60 mm were prepared from the reinforcing fabrics prepared in Examples and Comparative Examples.

Specifically, a specimen with a size of 60 mm x 320 mm was taken according to the ISO 13934-1 cut & strip test standard, and the threads on both sides of the specimen were peeled off to make a specimen with a total width of 5.0 mm. Then, the strength and elongation at the time when the sample fracture occurred were measured while pulling the specimen at a speed of 200 mm/min crosshead speed using a universal testing machine (UTM) according to the method specified in ISO 13934-1.

(2) Stiffness or King Stiffness

This is for measuring the stiffness in warp and weft directions, specimens with a size of 100 mm X 100 mm were taken from the reinforcing fabrics prepared in Examples and Comparative Examples, and were folded in half. In accordance with ASTM D4032, the folded specimen was mounted onto a circular bend stiffness measuring device, and then the plunger has push down at a speed of 2,000 mm/min, and the load applied at that time was measured using a digital gauge.

For reference, if the stiffness was lower than 6N as in Comparative Example, the puncture resistance against sharp objects (such as glass or protruding objects) were not good. In addition, when the king stiffness was excessively high, such as exceeding the numerical values of Examples listed in Table 2 below, the fabric may be too stiff, reducing the foldability and tear strength of the airbag cushion.

(3) Tear Strength

This is for measuring the tear strength in warp and weft directions, and specimens with a size of 150 mm x 200 mm were prepared from the reinforcing fabrics prepared in Examples and Comparative Examples. And, the tear strength of the specimen was measured by the tongue method specified in ISO 13937-2 using a universal testing machine (UTM). Specifically, while the specimen for measuring the tear strength in the warp direction was pulled in the warp direction, and the specimen for measuring the tear strength in the weft direction was pulled in the weft direction at a rate of 100 mm/min, the tear strength was measured.

(4) Dimension Stability

This is for measuring the dimensional stability of the textile fabric at high temperature, and the dimensional stability was measured for a specimen with a size of 300 mm x 300 mm. As the specimens, the reinforcing fabrics prepared in Examples and Comparative Examples were used. The specimen was marked horizontally and vertically with 250 mm$\times$250 mm, and then heat treated at high temperature, and then the length strain was measured. Specifically, the specimen was left in a high temperature chamber at 105°C for 60 minutes, and the strain was calculated using the following Equation.

$$\mathrm{Equation:} \ \{(X_0 - X_1)/X_0\} \ \mathrm{x} \ 100$$

(wherein, in Equation, $X_0$ is the initial length in the horizontal and vertical directions before storing the specimen at 105°C, and $X_1$ is the deformation length in the transverse and longitudinal directions after the specimen is stored at 105°C for 60 days.)

(5) Puncture Resistance

The puncture resistance of the textile fabric was measured according to ASTM-F1342. Specifically, the reinforcing fabric specimens prepared in Examples and Comparative Examples were mounted on a dedicated sample holder, and then penetrated the textile fabric with a probe having a tip radius of 1.0 mm using a universal testing machine (UTM), and the maximum force was measured.

(6) Impact Puncture Resistance

The instantaneous impact puncture resistance of the fabric specimen prepared in Examples and Comparative Examples were measured according to its own internal test specification. Specifically, a specimen having a size of 300 mm x 300 mm was obtained, and the specimen was mounted onto the sample holder of the self-made device as shown in Fig. 1. The test device of Fig. 1 was designed to apply a pendulum-type impact, and a cantilever equipped with a piece of glass probe was naturally dropped from a 180 degree horizontal position to apply an instantaneous impact to the fabric, and then the length of the section torn by the probe was measured.

[Table 1]

|  | Example 1 | Example 2 | Example 3 | Comparative Example 1 | Comparative Example 2 | Comparative Example 3 |
|---|---|---|---|---|---|---|
| Yarn liner fineness | 1,000 | 1,000 | 1,000 | 1,000 | 1,000 | 1,000 |
| Yarn tenacity | 9.0 | 10.0 | 9.0 | 7.0 | 9.0 | 9.0 |
| Yarn EASL | 5.0 | 5.0 | 5.0 | 7.0 | 5.0 | 5.0 |
| Yarn dry heat shrinkage | 4.5 | 4.5 | 4.5 | 2.0 | 4.5 | 4.5 |
| Dimension al stability index | 9.5 | 9.5 | 9.5 | 9.0 | 9.5 | 9.5 |
| Initial elastic modulus of yarn | 125 | 140 | 125 | 110 | 110 | 110 |
| Loom state weave constructio n | 20 x 20 | 20 x 20 | 24 x 24 | 20 x 20 | 18 x 18 | 20 x 20 |
| Finished fabric constructio n | 24.2 x 24.0 | 24.5 x 24.0 | 26.2 x 26.7 | 24.3 x 24.2 | 20.3 x 20.1 | 23.3 x 22.2 |
| Unit<br>* Yarn total fineness(liner density): Denier<br>* (Yarn Tenacity): g/d<br>* Elongation at specific load (EASL, at 4.5 g/d): %<br>*Yarn dry heat shrinkage: %<br>*Dimensional stability index (ES rate): Elongation at specific load (%) + Yarn dry heat shrinkage (%)<br>*Yarn initial modulus): g/d<br>*Loom state weave construction (warp x weft): th/inch<br>*Finished fabric construction (warp x weft): th/inch | | | | | | |

[Table 2]

|  | Example 1 | Example 2 | Example 3 | Comparativ e Example 1 | Comparativ e Example 2 | Comparativ e Example 3 |
|---|---|---|---|---|---|---|
| Tensile strength (warp) | 4,056 | 4,234 | 4,317 | 3,651 | 3,521 | 3,720 |
| Tensile strength (weft) | 3958 | 4252 | 4,452 | 3,568 | 3,662 | 3,651 |
| Elongation(warp) | 20.7 | 22.4 | 22.2 | 17.6 | 17.2 | 17.3 |
| Elongation(weft) | 19.3 | 23.2 | 20.5 | 19.6 | 18.3 | 16.6 |
| King stiffness (warp) | 8.8 | 9.5 | 10.5 | 5.5 | 4.3 | 5.2 |
| King stiffness(weft) | 7.8 | 8.4 | 11.8 | 5.2 | 4.8 | 4.3 |
| Tear strength (warp) | 414 | 472 | 492 | 312 | 325 | 354 |
| Tear strength (weft) | 374 | 453 | 487 | 304 | 312 | 320 |
| Dimensional stability(warp) | 0.1 | 0.2 | 0.1 | 0.4 | 0.4 | 1.2 |
| Dimensional stability(weft) | 0.1 | 0.3 | 0.1 | 0.3 | 0.2 | 1.5 |
| Puncture resistance | 12.6 | 15.2 | 19.7 | 5.3 | 3.4 | 4.3 |
| Impact puncture resistance | 1.2 | 1.1 | 1.5 | 6.7 | 10.3 | 6.5 |
| Unit<br>*Tensile strength: N/5cm | | | | | | |

(continued)

|  | Example 1 | Example 2 | Example 3 | Comparative Example 1 | Comparative Example 2 | Comparative Example 3 |
|---|---|---|---|---|---|---|
| *Elongation: % <br> *Tear strength: N <br> *King stiffness: N <br> *Dimensional stability: % <br> * Puncture resistance: N <br> * Impact puncture resistance (torn length): mm | | | | | | |

**Claims**

1. An airbag cushion comprising a fiber substrate; and a reinforcing fabric attached to at least a portion of the surface of the fiber substrate and containing polyester yarn as a warp or weft component,

   wherein the polyester yarn has a tenacity of 70.8 cN/tex (8.0 g/d) or more, and an elongation at specific load measured at a load of 39.8 cN/tex (4.5 g/d) of 3.0 to 6.0%, and
   wherein the reinforcing fabric has a finished fabric construction of 24 yarns or more to 40 yarns or less per 25.4 mm (1 inch) in the warp direction or weft direction,
   wherein the tenacity and the elongation at specific load are measured using the ASTM D885 method.

2. The airbag cushion according to claim 1, wherein the polyester yarn has an initial modulus in the range of 885 to 1327 cN/tex (100 to 150 g/d) measured using the ASTM D885 method.

3. The airbag cushion according to claim 1, wherein the reinforcing fabric includes the polyester yarn as warp and weft components.

4. The airbag cushion according to claim 1, wherein the reinforcing fabric has a finished fabric construction of 24 yarns or more to 40 yarns or less per 25.4 mm (1 inch) in each of the warp direction and the weft direction.

5. The airbag cushion according to claim 1, wherein the polyester yarn has a total fineness of 467 dtex (420 denier) or more.

6. The airbag cushion according to claim 1, wherein the polyester is polyethylene terephthalate.

7. The airbag cushion according to claim 1, comprising one layer of the reinforcing fabric.

8. The airbag cushion according to claim 1, wherein the fiber substrate includes one or more fibers selected from the group consisting of a nylon fiber, a polyester fiber, a polyolefin fiber, and an aramid fiber.

9. The airbag cushion according to claim 8, wherein the fiber substrate includes a fabric or a non-woven fabric.

10. A method for preparing an airbag cushion, the method comprising the steps of:

    preparing a fabric having a loom state weave construction of 20 yarns or more in the warp direction and the weft direction using a polyester yarn having a tenacity of 70.8 cN/tex (8.0 g/d) or more, and an elongation at specific load measured at a load of 39.8 cN/tex (4.5 g/d) of 3.0 to 6.0%;
    heat-treating the fabric at a temperature of 150°C or more to produce a reinforcing fabric having a finished fabric construction of 24 yarns or more to 40 yarns or less in the warp or weft direction; and
    attaching the reinforcing fabric onto at least a portion of a fiber substrate surface,
    wherein the tenacity and the elongation at specific load are measured using the ASTM D885 method.

11. The method according to claim 10, wherein the polyester yarn has a dry heat shrinkage of 10% or less measured according to ASTM D4974.

**12.** The method according to claim 10, wherein the polyester yarn satisfies a dimension stability index of 10 or less as determined by the following Equation 1:

[Equation 1] Dimension stability index = Elongation at specific load of yarn + Dry heat shrinkage of yarn,

[Equation 2]

wherein, in Equation 1, the elongation at specific load is the elongation at a load of 39.8 cN/tex (4.5 g/d), which is confirmed in the tensile test conducted according to the ASTM D885 method, and the dry heat shrinkage is measured according to ASTM D4974.

**Patentansprüche**

**1.** Airbagkissen, umfassend ein Fasersubstrat und ein Verstärkungsgewebe, das an mindestens einem Teil der Oberfläche des Fasersubstrats befestigt ist und Polyestergarn als Kett- oder Schusskomponente enthält,

wobei das Polyestergarn eine Festigkeit von 70,8 cN/tex (8,0 g/d) oder mehr und eine Dehnung bei spezifischer Belastung, gemessen bei einer Belastung von 39,8 cN/tex (4,5 g/d), von 3,0 bis 6,0% aufweist, und
wobei das Verstärkungsgewebe eine fertige Gewebekonstruktion von 24 Garnen oder mehr bis 40 Garnen oder weniger pro 25,4 mm (1 Zoll) in Kettrichtung oder Schussrichtung aufweist,
wobei die Festigkeit und die Dehnung bei spezifischer Belastung unter Verwendung des ASTM D885-Verfahrens gemessen werden.

**2.** Airbagkissen gemäß Anspruch 1, wobei das Polyestergarn einen Anfangsmodul im Bereich von 885 bis 1327 cN/tex (100 bis 150 g/d) aufweist, gemessen unter Verwendung des ASTM D885-Verfahrens.

**3.** Airbagkissen gemäß Anspruch 1, wobei das Verstärkungsgewebe das Polyestergarn als Kett- und Schusskomponenten enthält.

**4.** Airbagkissen nach Anspruch 1, wobei das Verstärkungsgewebe eine fertige Gewebekonstruktion von 24 Garnen oder mehr bis 40 Garnen oder weniger pro 25,4 mm (1 Zoll) sowohl in Kettrichtung als auch in Schussrichtung aufweist.

**5.** Airbagkissen nach Anspruch 1, wobei das Polyestergarn eine Gesamtfeinheit von 467 dtex (420 Denier) oder mehr aufweist.

**6.** Airbagkissen gemäß Anspruch 1, wobei das Polyester Polyethylenterephthalat ist.

**7.** Airbagkissen gemäß Anspruch 1, umfassend eine Schicht des Verstärkungsgewebes.

**8.** Airbagkissen gemäß Anspruch 1, wobei das Fasersubstrat eine oder mehrere Fasern, ausgewählt aus der Gruppe bestehend aus einer Nylonfaser, einer Polyesterfaser, einer Polyolefinfaser und einer Aramidfaser, umfasst.

**9.** Airbagkissen gemäß Anspruch 8, wobei das Fasersubstrat ein Gewebe oder ein Vlies umfasst.

**10.** Verfahren zur Herstellung eines Airbagkissens, wobei das Verfahren die Schritte umfasst:

Herstellen eines Gewebes mit einer Webkonstruktion im Webzustand von 20 oder mehr Garnen in der Kettrichtung und in der Schussrichtung unter Verwendung eines Polyestergarns mit einer Festigkeit von 70,8 cN/tex (8,0 g/d) oder mehr und einer Dehnung bei spezifischer Belastung, gemessen bei einer Belastung von 39,8 cN/tex (4,5 g/d), von 3,0 bis 6,0%;
Wärmebehandeln des Gewebes bei einer Temperatur von 150°C oder mehr, um ein Verstärkungsgewebe mit einer fertigen Gewebekonstruktion von 24 Garnen oder mehr bis 40 Garnen oder weniger in Kett- oder Schussrichtung herzustellen; und
Anbringen des Verstärkungsgewebes auf mindestens einem Teil einer Fasersubstratoberfläche,
wobei die Festigkeit und die Dehnung bei spezifischer Belastung unter Verwendung des ASTM D885-Verfahrens gemessen werden.

**11.** Verfahren nach Anspruch 10, wobei das Polyestergarn eine Trockenwärmeschrumpfung von 10% oder weniger aufweist, gemessen gemäß ASTM D4974.

**12.** Verfahren nach Anspruch 10, wobei das Polyestergarn einen Dimensionsstabilitätsindex von 10 oder weniger erfüllt, der durch die folgende Gleichung 1 bestimmt wird:

Dimensionsstabilitätsindex = Dehnung des Garns bei spezifischer Belastung + Trockenwärmeschrumpfung des Garns,          [Gleichung 1]

wobei in Gleichung 1 die Dehnung bei spezifischer Belastung die Dehnung bei einer Belastung von 39,8 cN/tex (4,5 g/d) ist, die in der Zugprüfung gemäß dem ASTM D885-Verfahren bestätigt wird, und die Trockenwärmeschrumpfung gemäß ASTM D4974 gemessen wird.

**Revendications**

**1.** Coussin gonflable comportant un substrat de fibres ; et une étoffe de renfort fixée à au moins une partie de la surface du substrat de fibres et contenant du fil de polyester en tant que composant de chaîne ou de trame,

dans lequel le fil de polyester a une ténacité de 70,8 CN/tex (8,0 g/d) ou plus, et un allongement à une charge spécifique mesuré à une charge de 39,8 CN/tex (4,5 g/d) de 3,0 à 6,0 %, et
dans lequel l'étoffe de renfort a une construction d'étoffe finie de 24 fils ou plus à 40 fils ou moins par 25,4 mm (1 pouce) dans le sens de la chaîne ou de la trame,
dans lequel la ténacité et l'allongement à une charge spécifique sont mesurés en utilisant la méthode ASTM D885.

**2.** Coussin gonflable selon la revendication 1, dans lequel le fil de polyester a un module initial dans la plage de 885 à 1 327 CN/tex (100 à 150 g/d) mesuré en utilisant la méthode ASTM D885.

**3.** Coussin gonflable selon la revendication 1, dans lequel l'étoffe de renfort inclut le fil de polyester en tant que composants de chaîne et de trame.

**4.** Coussin gonflable selon la revendication 1, dans lequel l'étoffe de renfort a une construction d'étoffe finie de 24 fils ou plus à 40 fils ou moins par 25,4 mm (1 pouce) dans chaque sens parmi le sens de la chaîne et le sens de la trame.

**5.** Coussin gonflable selon la revendication 1, dans lequel le fil de polyester a une finesse totale de 467 dtex (420 deniers) ou plus.

**6.** Coussin gonflable selon la revendication 1, dans lequel le polyester est le polyéthylène téréphtalate.

**7.** Coussin gonflable selon la revendication 1, comportant une couche de l'étoffe de renfort.

**8.** Coussin gonflable selon la revendication 1, dans lequel le substrat de fibres inclut une ou plusieurs fibres choisies parmi le groupe constitué d'une fibre de nylon, d'une fibre de polyester, d'une fibre de polyoléfine et d'une fibre d'aramide.

**9.** Coussin gonflable selon la revendication 8, dans lequel le substrat de fibres inclut une étoffe ou un non-tissé.

**10.** Procédé de préparation d'un coussin gonflable, le procédé comportant les étapes consistant à :

préparer une étoffe ayant une construction d'armure écrue de 20 fils ou plus dans le sens de la chaîne et dans le sens de la trame en utilisant un fil de polyester ayant une ténacité de 70,8 CN/tex (8,0 g/d) ou plus, et un allongement à une charge spécifique mesuré à une charge de 39,8 CN/tex (4,5 g/d) de 3,0 à 6,0 % ;
traiter thermiquement l'étoffe à une température de 150 °C ou plus pour produire une étoffe de renfort ayant une construction d'étoffe finie de 24 fils ou plus à 40 fils ou moins dans le sens de la chaîne ou de la trame ; et
fixer l'étoffe de renfort sur au moins une partie de la surface d'un substrat de fibres,
dans lequel la ténacité et l'allongement à une charge spécifique sont mesurés en utilisant la méthode ASTM D885.

**11.** Procédé selon la revendication 10, dans lequel le fil de polyester a un retrait thermique à sec de 10 % ou moins mesuré selon la norme ASTM D4974.

**12.** Procédé selon la revendication 10, dans lequel le fil de polyester satisfait à un indice de stabilité dimensionnelle de 10 ou moins tel que déterminé par l'Équation 1 suivante :

[Équation 1] Indice de stabilité dimensionnelle = Allongement à une charge spécifique du fil + Retrait thermique à sec du fil,      [Equation 1]

dans lequel, dans l'Équation 1, l'allongement à une charge spécifique est l'allongement à une charge de 39,8 CN/tex (4,5 g/d), qui est confirmé dans l'essai de traction réalisé selon la méthode ASTM D885, et le retrait thermique à sec est mesuré selon la norme ASTM D4974.

【FIG. 1】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200080355
- KR 1020210083993
- JP 3849818 B
- JP 2000211459 A
- JP 2000313295 A
- US 9617664 B2